# EUROPEAN PATENT SPECIFICATION

(11) **EP 2 822 748 B1**
(45) Date of publication and mention of the grant of the patent: **05.08.2020**
(21) Application number: 13757963.7
(22) Date of filing: 08.03.2013
(51) Int. Cl.: B29C 48/00

(54) **APPARATUS AND METHOD FOR PRODUCING MICROCELLULAR FOAMS**
VORRICHTUNG UND VERFAHREN ZUR HERSTELLUNG VON MIKROZELLULAREN SCHAUMSTOFFEN
APPAREIL ET PROCÉDÉ POUR PRODUIRE DES MOUSSES MICROCELLULAIRES

(30) Priority: 09.03.2012 HU 1200156
(43) Date of publication of application: 14.01.2015
(73) Proprietor: Furukawa Electric Co., Ltd., Chiyoda-ku Tokyo 100-8322 (JP)
(72) Inventor: MAROSFOI, Botond, H-1158 Budapest (HU); POMLENYI, Peter, H-1158 Budapest (HU); GOMBOS, Akos, H-1158 Budapest (HU); INAMORI, Kojiro, Tokyo 100-8322 (JP); OKITA, Yutaka, Tokyo 100-8322 (JP)
(74) Representative: Forstmeyer, Dietmar
(86) International application number: PCT/JP2013/057319
(87) International publication number: WO 2013/133453

(56) References cited:
- EP-A2- 1 072 375
- GB-A- 2 059 864
- GB-A- 2 059 864
- JP-A- S4 995 189
- JP-A- S5 141 066
- JP-A- S5 555 815
- JP-A- H05 237 908
- JP-A- H07 276 463
- JP-A- H07 276 470
- JP-A- S52 133 381
- US-A- 3 792 839
- US-A- 3 902 704
- US-A- 4 409 165
- US-A1- 2006 034 958
- US-A1- 2007 036 029

## Description

### TECHNICAL FIELD

The invention relates to an apparatus for producing microcellular foams, comprising an extruder cylinder having an extruder screw therein provided with a spiral flight running around a core, and a feeder unit suitable for feeding a polymeric base material and connected to an inlet formed on the cylinder and communicating with an inner space delimited by the cylinder and the extruder screw, furthermore, an extrusion outlet is formed on the cylinder, the apparatus further comprising means for feeding a foaming agent into the inner space and means for rotating the screw. The present invention also relates to a method for producing microcellular foams, comprising feeding a polymeric base material and a foaming agent into an inner space formed between an extruder cylinder and an extruder screw placed therein and provided with a spiral flight running around a core while the screw is rotated, and extruding the mixture containing the polymeric base material and the foaming agent from the cylinder through an outlet.

### BACKGROUND ART

Use of polymer foams for technical purposes is known and widespread. Continuous production of these foams is generally achieved by extrusion methods. The fusion of the polymer and its mixture with a foaming agent takes place inside an extruder apparatus. In the case of physical foaming, the foaming agent mixed with the polymer phase becomes a gas as a result of a pressure change on exiting the extruder apparatus, creating gas cells inside the polymer. These cells can be separated by a thin polymer film in this foam structure (closed-cell structure) or the air space of the cells may also be shared (open-cell structure). Several polymer-type materials may be used as base materials of these foams. Polyolefins are widely applied due to their excellent price/value ratio.

Microcellular foams deserve particular attention due to their advantageous features (e.g. uniform foam structure, narrow cell size distribution, appearance, etc.). A method for producing microcell foams is known from Patent Literature 1. Using this process, the physical foaming agent (which may be in supercritical state) is metered into the melt through openings formed on the cylinder of the extruder apparatus.

Injection through the screw is another possibility as described by Patent Literature 2. The inventors of the latter state that introducing the foaming agent through several holes improves the characteristics of the foam. An intensive contact between and mixing of these two materials, i.e., the physical foaming agent and the melt, can be achieved via vanes on the screw used in the extrusion apparatus. The quantity of the foaming agent mixed into the polymer phase determines density, while the quality of mixing determines the structure of the foam. Microcell foams are created by a single-phase mixture of the polymer phase and the foaming agent. Simplifying the model of formation of the polymer/foaming agent single-phase system, three different steps can be distinguished into: i.: delivering a foaming agent into the bulk phase of the polymer; ii.: dispersing the foaming agent in the melt; and iii.: dispersing the foaming agent into the bulk phase of the melt. Of course, the actual process taking place may be significantly more complex, even if only the diffusion of the foaming agent in the melt is taken into account, for example.

The physical foaming agent most frequently used in production of microcell foams is nitrogen or carbon dioxide in supercritical state. According to the method disclosed in Patent Literature 1, the physical foaming agent is delivered through a bore hole formed on the extruder cylinder or on the screw. A disadvantage of this approach is that the foaming agent contacts the surface of the melt first, since injection takes place from the inner surface of the cylinder and/or the outer surface of the screw. Thus, further measures are necessary to create a single-phase foaming agent/polymer system, e.g. introducing the physical foaming agent into the polymer bulk phase and dispersing and distributively mixing it therein. To achieve this, further mixing means must be provided in order to mix the foaming agent and the melt. Furthermore, occasionally, a contiguous foaming agent cushion may be formed between the surface of the melt and the screw and/or the cylinder, resulting in drastic quality deterioration of the foam structure and unstable operation.

Another drawback of injecting from the wall of the extruder cylinder is that a periodic fluctuation in the injection process can be observed due to the periodic passage of the vanes in front of the injection unit. In order to avoid an influence of this phenomenon on the homogeneity of the fused polymer, the use of a mixer is a must. There is a further problem relating to the desirability of adjusting the temperature and pressure of the melt and the foaming agent in supercritical state to the same value for achieving good mixing. This requires a properly controlled injection unit, which may be achieved only by using a more complex injection system disclosed, e.g., by Patent Literature 3. In the case of production of low-density foams, the ratio of the polymer to the physical foaming agent is a very important factor. If the physical foaming agent is applied in a supercritical state, this effect becomes more pronounced, since its thermal characteristics resemble more those of a liquid than those of a gas. When the foaming agent is not preheated adequately, local solidification and freezing may occur upon contact with the melt, resulting in an inhomogeneous mixture.

### CITATION LIST

### Patent Literatures

Patent Literature 1: International patent publication No. WO 98/08667
Patent Literature 2: International patent publication No. WO 98/031521
Patent Literature 3: U.S. Patent No. 6,926,507

US 3,902,704 discloses equipment for preparation of foamed polyolefin insulated wires for telecommunication cables. US 2006/0034958 A1 discloses a device and a method for producing physically expanded structural foams during an injection molding process involving the use of dynamic mixing elements. EP 1 072 375 A2 discloses a method and an apparatus for producing polymer foams. US 2007/0036029 A1 discloses an apparatus for impregnating a polymer melt with a fluid expanding agent or additive. US 3,792,839 discloses a device for the injection of fluid foaming agents into plasticized polymeric material. GB 2 059 864 A discloses a plastics extruder with means for injecting a liquid additive into the flow of molten plastics.

### DISCLOSURE OF INVENTION

### TECHNICAL PROBLEM

An object of this invention is therefore to provide a method and an apparatus for producing microcellular foams which would eliminate the drawbacks of the conventional approaches by delivering the physical foaming agent into the inside or bulk phase of the melt directly, instead of delivering it to the surface thereof, in order to simplify the formation of a single-phase system containing melt/foaming agent in such a way that only a dispersive and distributive mixing is to be provided after injection, and eliminating the need for processing the polymer and the foaming agent at the same temperature.

Another object of the present invention is to provide adequate homogeneity of the polymer/foaming agent mixture without using auxiliary mixing elements and on a shorter stretch along the flow channel of the polymer measured from the inlet point thereof compared to the conventional approaches, consequently also to decrease the length demand and space demand of the extruder for producing microcellular foams according to the invention, and increasing both the inner diameter of the cylinder and the diameter of the screw flight accordingly, providing increased productivity of the apparatus.

### SOLUTION TO PROBLEM

The object of the present invention is achieved by providing an apparatus for producing microcellular foams, in which an extruder cylinder (1) and an extruder screw (2) provided with a spiral flight (2b) therein and running around a core (2c) are situated, the apparatus having a feeder unit (8) suitable for feeding a polymeric base material into an inner space (5) delimited by the cylinder (1) and the extruder screw (2) and connected to a feeder inlet (8a) formed on the cylinder (1) and communicating with the inner space (5), an extrusion outlet (8b) being formed on the cylinder (1), the apparatus further comprising means for feeding a foaming agent into the inner space (5) and means for rotating the screw (2), wherein the means for feeding said foaming agent is at least one nozzle (3a) connected to a bore hole (3), a nozzle orifice (3aa) of which, opening into the inner space (5), is situated between the surface (2c1) of the core (2c) and the inner surface (1a) of the cylinder (1) in such a way that the distance between the nozzle orifice (3aa) and the surface (2c1) is greater than 0, and wherein the nozzle (3a) is connected to the bore hole (3) formed in a wall (1b) of the cylinder (1), and wherein the nozzle orifice (3aa) of the nozzle (3a) is situated on a surface (F) of a disc (32a) situated in the inner space (5), and a mantle (P) of the disc (32a) is in contact with the inner wall (1a) of the cylinder (1) in the vicinity of the bore hole (3), and a channel (35, 37) for guiding the foaming agent is formed on the mantle (P) of the disc (32a), and a melt channel (36) is formed between two surfaces (F) of the disc (32a), and wherein the nozzle orifices (3aa) of the nozzles (3a) are situated on an inner surface of the melt channel (36) formed between the two surfaces (F) of the disc (32), characterized in that at least two discs (32) are situated side by side, and a first disc (32) is attached to the screw (2), while a second disc (32) is attached to the inner surface (1a) of the cylinder (1).

The object of the present invention is also achieved by providing a method for producing microcellular foams, comprising feeding a polymeric base material and a foaming agent into an inner space (5) formed between an extruder cylinder (1) and an extruder screw (2) placed therein provided with a spiral flight (2b) and running around a core (2c), while the screw (2) is rotated, and extruding a composition composed of the polymeric base material and the foaming agent through an extrusion outlet (8b) from the cylinder (1), wherein the foaming agent is metered into the inner space (5) through a nozzle orifice (3aa) of at least one nozzle (3a), the nozzle orifice (3aa) being situated between the surface (2c1) of the core (2c) and an inner surface (1a) of the cylinder (1) at a distance between the nozzle orifice (3aa) and the surface (2c1) that is greater than 0, and wherein the foaming agent is metered to the nozzle (3a) through a bore hole (3) formed in a wall (1b) of the cylinder (1), and wherein a disc (32) situated around the core (2c) is placed in the inner space (5), a melt channel (36) is formed between the two surfaces (F) of the disk (32), and the nozzle orifice (3aa) of the nozzle (3a) is placed on the disc (32), and wherein the nozzle orifice (3aa) of the nozzle (3a) is situated on an inner surface of the melt channel (36), characterized in that at least two consecutive discs (32) are used and the discs (32) are attached to the screw (2) or to the cylinder (1).

Other and further features and advantages of the invention will appear more fully from the following description, appropriately referring to the accompanying drawings.

### BRIEF DESCRIPTION OF THE DRAWINGS

The present invention will be elucidated in detail by describing its advantageous embodiments with reference to the attached drawing. In the drawing,
Figure 1 depicts a first extruder apparatus for production of microcellular foams;
Figure 2 depicts an advantageous embodiment of the extruder apparatus according to the invention for production of microcellular foams;
Figures 3a through 3d show different embodiments of the nozzle;
Figure 4 shows an advantageous embodiment of a tube-shaped nozzle having several nozzle orifices;
Figure 5 shows a nozzle embodied as a sintered sleeve;
Figure 6 shows a nozzle embodied with a rotor part, in the figure, the left-handed drawing depicts a vertical cross-section, and the right-handed drawing depicts a horizontal cross-section (the same is applied hereafter);
Figures 7 to 7a show a disc having porous structure used as a nozzle;
Figures 8 and 8a show a disc provided by nozzles and a chopper vane;
Figures 9 and 9a show a group of discs provided with nozzles;
Figure 10 shows a nozzle embodiment situated on cogwheels;
Figure 11 shows a gas-supplying nozzle embodiment according to the invention, provided with a nonreturn valve;
Figure 12 shows another gas-supplying nozzle embodiment according to the invention, with the six drawings in the right-handed side depicting schematically some types of the cross-section; and
Figure 13 shows another nozzle embodiment of the nozzle, as shown in Figure 12, which is tapered.

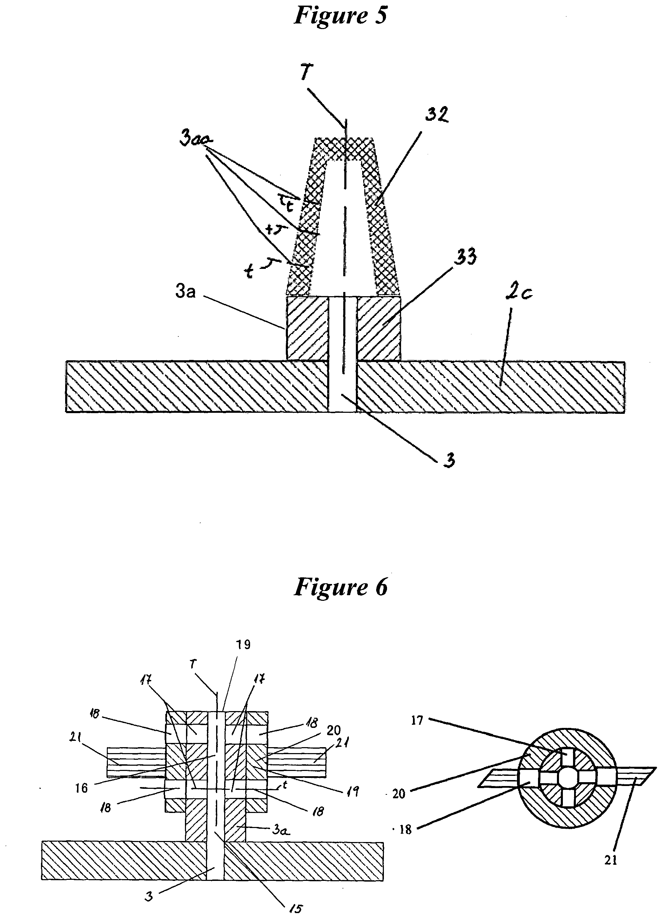

In the figures, e.g. Figure 6, which include two drawings in the left-handed side and the right-handed side, those two drawings are schematically depicted and they are not depicted in the identical scale. Further, the scale and size of the respective part or element are not identical each other in those two drawings in the same figure.

### MODE FOR CARRYING OUT THE INVENTION

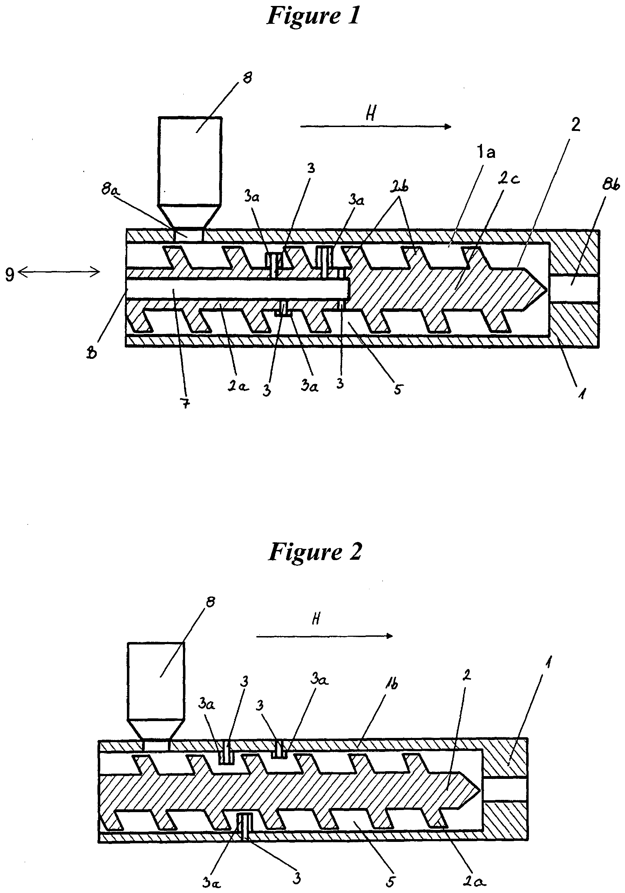

Figure 1 depicts a first extruder apparatus for production of microcellular foams. The extruder apparatus comprises an extruder cylinder 1 having an extruder screw 2 rotatably situated therein and is provided with a spiral flight 2b and running around a core 2c, fixed to core 2c or formed as a single piece therewith. Extruder screw 2 can be rotated in cylinder 1 by means of a driving unit not shown in the drawing. A polymer base material to be foamed can be directly delivered into cylinder 1, that is, into an inner space 5 situated between cylinder 1 and screw 2, from a feeder unit 8 attached to a feeding orifice 8a opening into inner space 5 delimited by cylinder 1 and screw 2. An extruding orifice 8b is also formed on cylinder 1. The apparatus is provided with means for delivering a foaming agent into inner space 5, as well as with a driving unit (not shown) for rotating screw 2.

In this apparatus the foaming agent is guided through an inner flow-channel 7 formed in screw 2 and an opening B to at least one bore-hole 3 formed between fights 2b of screw 2 and connecting flow channel 7 to inner space 5.

First bore-hole 3 in the direction of flow H of the polymer to be foamed is situated downstream from the inlet orifice 8a of the container 8, and a tubular nozzle 3a terminating in the middle of the distance between the inner wall of the cylinder 1 and the wall 2a of the screw 2 is connected to the bore-hole 3. A second bore-hole 3 is situated in the direction H of the flow of the foaming agent, and another tubular nozzle 3a projecting from the wall 2a of the screw 2 is connected to the bore-hole 3, and terminates near the inner wall of the cylinder 1. A third bore-hole 3 is situated further, in direction H of flow of the polymer to be foamed, on the opposite side of the core 2c opposite to the first bore-hole 3 and still another tubular nozzle 3a, which projects from the wall 2a of the screw 2, and terminates in the inner space 5 between the inner wall of the cylinder 1 and the wall 2a of the screw 2, near the wall 2a of the screw 2, is connected to the third bore-hole 3.

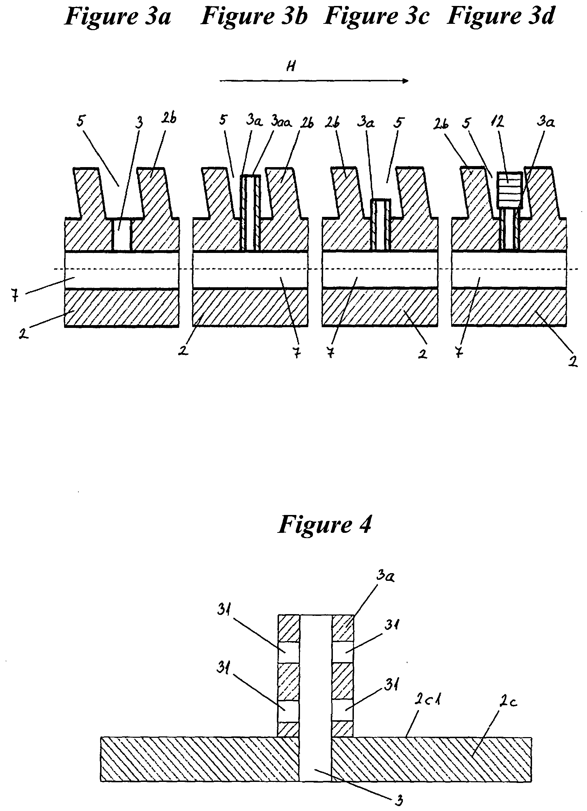

Of course, several bore-holes 3 and the nozzles 3a attached thereto can be situated spaced apart at any distance between the spiral flights 2b of the screw 2 along the periphery of the wall 2a of the screw 2 as long as the number of bore-holes 3 does not negatively affect the shear strength of the screw 2. In the present apparatus there are further bore-holes 3 without nozzles 3a connected thereto. Along the direction H, the nozzles 3a having different heights deliver the foaming agent through their nozzle orifices 3aa into all layers of the polymer flowing in the space 5 (see also Figures 3b, 3c, 3d), preventing the polymer/foaming agent mixture from creating inhomogeneity or any foaming agent cushion therein, i.e., the need for applying further mixing means is eliminated. The length of the flow channel 7 can be determined experimentally. It is preferred that the length extends to a distance along the direction H at which an adequately homogeneous mixture exits in the extruder orifice 8b. In this apparatus the screw 2 can be moved back and forth in the cylinder 1 in a limited measure along an axis parallel to the direction H, as referenced by an arrow 9 in Figure 1, which is advantageous for some kinds of injection molding operations. Therefore, the means for delivering the foaming agent for production of microcellular foams is at least one nozzle 3a, having the nozzle orifice 3aa communicating with the inner space 5, and situated between a surface 2c1 of the core 2c and an inner surface 1a of cylinder 1 in such a way that the distance between the nozzle orifice 3aa and the surface 2c1 is greater than 0, i.e., the foaming agent can be delivered inside the polymer mass instead of its surface. The length of the nozzles 3a situated in the space between the extruder cylinder 1 and the screw 2 having the spiral flight 2b running around the core 2c is arbitrary.

Figure 2 depicts an embodiment of the extruder for production of microcellular foams according to the invention. In this embodiment the screw 2 has no flow-channel 7, since the at least one nozzle 3a projecting into the space 5 is connected to the bore-hole 3 formed in a wall 1b of the cylinder 1. Of course, the nozzles 3a cannot be situated at an arbitrarily small distance to each other along the wall 1b of the cylinder 1, because the spiral flight 2b of the screw 2 has to be interrupted at a cross section corresponding to the position of the nozzle 3a projecting into the space 5 in order to prevent the nozzle 3a from interfering with the spiral flight 2b. Therefore, in this embodiment, the screw 2 cannot or can barely be moved parallel to the direction H of flow in the cylinder 1.

Figures 3a through 3d show different embodiments of the nozzles 3a used in the first extruder apparatus. The nozzle 3a depicted in Figure 3a is essentially a bore-hole 3 formed in the screw 2, which does not project into the space 5; therefore, using this nozzle 3a, the foaming agent may be delivered into a layer of the polymer mass in contact with the screw 2. The nozzle 3 depicted in Figure 3b projects deeply into the space 5; therefore, the foaming agent may be delivered via this nozzle into a layer of the polymer mass in contact with the inner wall of the cylinder 1. The nozzle 3 depicted in Figure 3c projects into the middle range of the space 5; therefore, the foaming agent may be delivered via this nozzle into a middle layer of the polymer mass flowing in the space 5. A spray head 12 is situated on the upper nozzle orifice 3aa projecting into the space 5 of the nozzle 3a depicted in Figure 3d, which increases the mixing rate of the melt and the foaming agent, as well as the homogeneity of the mixture.

Using an advantageous combination of nozzles 3a depicted in Figures 3a through 3d, a substantially better homogeneity may be achieved compared to any approach of the state of the art, e.g., the use of separate mixing means. Since the nozzles 3a operate as mixing means as well, the mixing process of the composition starts directly at the place of introduction of the foaming agent. Thus, the length of the mixing zone created along the screw 2 can be reduced.

It is also possible to achieve adequate homogeneity of the polymer/foaming agent mixture without any auxiliary mixing means along a yet shorter section along the direction H measured from the entering point of the polymer, when the nozzles 3a are not merely the tubular nozzles 3a open at both ends, and preferably provided with the spray head 12, described in the above embodiments shown in Figure 3b to 3d.

To this end, further, the more complex nozzles 3a may further enhance the homogeneity of the mixture. The nozzle 3a shown in Figure 4 has further holes 31 formed on its wall at different heights measured from the surface 2c1 of the screw core 2c; thus the foaming agent may be delivered into the space 5 at different heights by means of a single nozzle 3a.

In a preferred embodiment of the nozzle 3a shown in Figure 5, the foaming agent can be delivered into the space 5 through pores of a sintered metal sleeve 32. The metal sleeve 32 is attached to a connecting element 33 of the nozzle 3a, which is further connected to the bore-hole 3 formed in the wall 2c of the screw core 2c. With this approach, the foaming agent can be continuously delivered into the space 5 along the height of the nozzle 3a through the pores densely placed on the outer surface of the metal sleeve 32. Thus, the nozzle 3a is the metal sleeve 32 itself having a number of nozzle orifices 3aa as pores on its surface, axes t of the pore nozzles 3aa each forming an angle with the axis T of the nozzle 3a.

An inlet opening 15 of the nozzle 3a as shown in Figure 6 is connected to the bore-hole 3. The embodiment of nozzle 3a is similar to that of the nozzle 3a shown in Figure 4, except that the nozzle 3a is provided with a rotating part 19 having holes 18. The rotating part 19 is rotatable around the axis T of the nozzle 3a. The foaming agent introduced through at least one hole 18 is delivered into the space 5 through the hole 18 of the rotating part 19 when the bore hole 18 overlaps with at least one bore hole 17 of the nozzle 3a. This approach enables a discontinuous, pulsating inflow of the foaming agent into the melt. Rotary motion of the rotating part 19 is provided by the melt advancing in the space 5 by applying a rotating torque of a force applied to at least one vane 21 situated on the rotating part 19. Several bore holes 17 can be formed in the nozzle 3a at different heights. In this embodiment, the axis t of the nozzle orifice 3aa of the nozzle 3a is perpendicular to the axis T of the nozzle 3a. In the figure, 16 is a bore hole and 20 is a rotor unit.

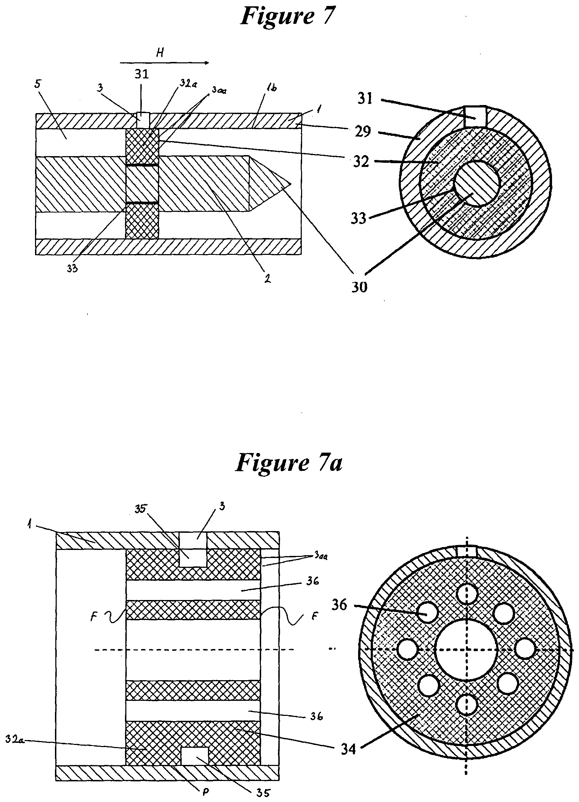

In Figures 7 and 7a a further embodiment of the apparatus for producing microcellular foams according to the invention is shown, which is similar to the second embodiment thereof, although the nozzle 3a does not protrude from the bore-hole formed in the wall 1b of the cylinder 1, but the nozzle 3a is a spray disc 32 having a porous structure and situated in the cross section of the space 5, resting, along its outer periphery, on the wall 1b of the cylinder 1. The nozzle orifices 3aa are situated on a surface F of a disc 32a as pores, a mantle P of the disc 32a contacting the inner surface 1a of the cylinder 1 in the vicinity of the bore-hole 3. On the mantle P of the disc 32a, a channel 35 for the foaming agent and between the surfaces F of the disc 32a, a channel 36 for the melt are formed. The disc 32a has a porous structure, e.g. is made of sintered metal; consequently, it is suitable for transferring the foaming agent from the bore-hole 3 into the space 5 in its whole extension. Therefore, the nozzle 3a is the disc 32a itself, which has several porous nozzle orifices 3aa situated on its surface. The disc 32a has a central bore hole, bearing-fitted on the screw 2 in order to enable free rotation of the disc 32a in relation to the screw 2. Stepped shoulders 33 are formed on the screw 2 on both sides of the bearing of the disc 32a, preventing the disc 32a from moving in the direction H, thus fixing the relative position of the disc 32a and the screw 2. In a preferred embodiment, a channel 35 for the foaming agent is formed circumferentially on the mantle of the disc 32a (Figure 7a), which enlarges the entry surface into the porous structure of the disc 32a of the foaming agent leaving bore-hole 3, and spreading it evenly along the periphery of the mantle of the disc 32a. The fused polymer passing through the channel 36 situated parallel to the direction H intermixes with the foaming agent exiting the wall of the channel 36. In the figure, 31 is the hole, 29 (1) is the cylinder, 30 (2) is the screw, and 34 is a disc.

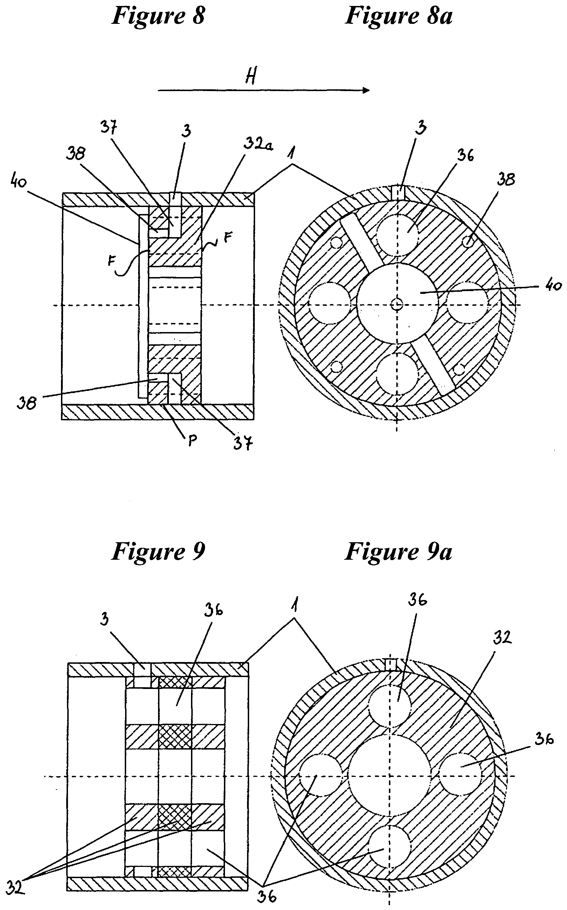

In a further preferred embodiment shown in Figures 8 and 8a, the disc 32 is provided with a chopper vane 40 firmly attached to the screw 2 and rotating therewith; during its rotation it briefly blocks openings 38 for the foaming agent, connected to channels 37 formed in the disc 32 by the bore hole 3. While during the rotation of the material chopper vane 40 periodically homogenizes the melt/foaming agent mixture by interrupting the mass flow, the melt/foaming agent mixture passing through the disc 32 in the channel 36 in the direction H.

In an advantageous embodiment shown in Figures 9 and 9a, at least two discs 32, but three discs 32 in the embodiment depicted, are provided consecutively, and the discs 32 are attached to the screw 2 (not shown) or to the cylinder 1. Thus, proper mixing can be achieved by conducting the foaming agent from the wall of the melt channel 36 into the melt space 5.

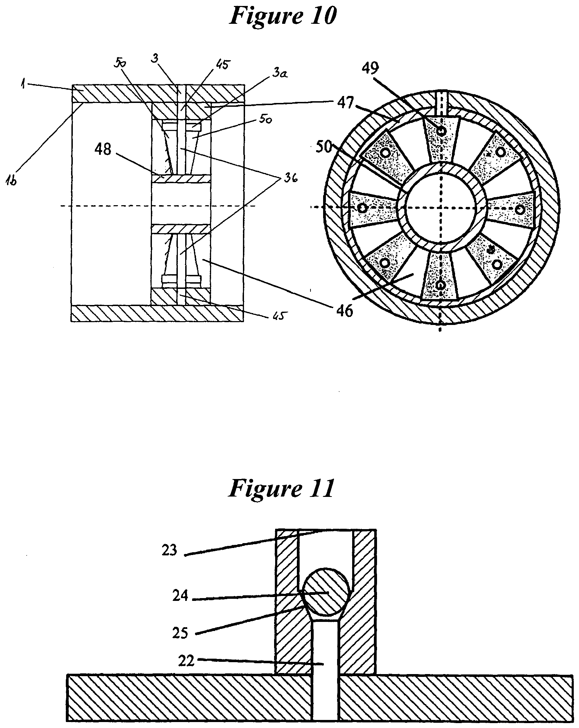

In the embodiment shown in Figure 10, nozzle 3a is formed by an assembly of several nozzles 3a situated on two cogwheels 50 having internal conical teeth, fixed to the screw 2 (not shown in the Figure), and rotating therewith. A gap 45 for the foaming agent, which connects the nozzles 3a and the bore-hole 3 formed in the wall 1b of the cylinder 1 is formed between the cogwheels 50. Flow of the melt is enabled by the melt channels 36 formed between the nozzles 3a. In the figure, 46 is a space, 47 is an inner cylinder, 48 (2) is the screw, and 49 (3a) is the nozzle.

Figure 11 shows an embodiment of a gas-supplying nozzle for use in the invention, which is provided with a nonreturn valve. In the figure, 22 is a nozzle that is an inlet of the foaming agent, 23 is a nozzle that is an outlet of the foaming agent, 24 is a ball for non-returning of the foaming agent, and 25 is a sealed face.

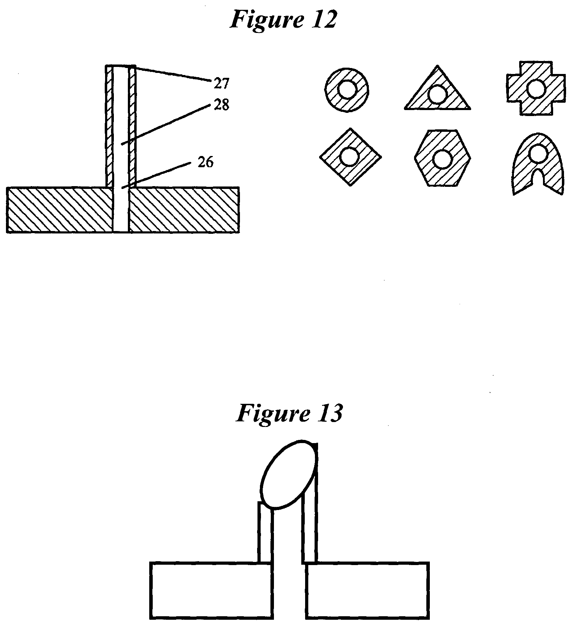

Figure 12 shows another embodiment of the gas-supplying nozzle for use in the invention. The six drawings in the right-handed side depict schematically some types of the cross-section of the nozzle. In the figure, 26 is a nozzle that is an inlet of the foaming agent, 27 is a nozzle that is an outlet of the foaming agent, and 28 is a channel.

Figure 13 shows another nozzle embodiment of the nozzle shown in Figure 12. This nozzle of Figure 13 is tapered. The tapered nozzle causes turbulence of the polymer flow around it, to enhance mixing of the polymeric base material and the injected gas.

### ADVANTAGEOUS EFFECTS OF THE INVENTION

During the method according to the invention, the polymeric base material to be foamed and the foaming agent are fed into the inner space 5 formed between the extruder cylinder 1 and the extruder screw 2 placed therein, while rotating the screw 2. The foaming agent is delivered into the inner space 5 through the nozzle orifice 3a of the nozzle 3, situated between the surface 2c1 of the core 2c and the inner surface 1a of the cylinder 1 at a distance between the nozzle orifice 3aa and the surface 2c1 that is greater than 0. The foaming agent, e.g. CO₂ or N₂, is delivered to the nozzle 3a through the bore hole 3 formed in the wall 1b of the cylinder 1, or the melt channel 36 is formed in the melt space 5 between the two surfaces F of the disc 32 situated around the screw 2, and the nozzle orifice 3aa of the nozzle 3a is positioned on the disc 32. Alternatively, the nozzle orifice 3aa of the nozzle 3a can be placed on the surface F of the disc 32 or on the inner surface of the melt channel 36.

Since proper homogeneity is achieved along a shorter length along the direction H measured from the inlet point of the polymer, compared to the approach of the state of the art, the length of the apparatus for producing microcellular foams according to the invention is substantially shorter, which in turn reduces the space requirement of the apparatus. Moreover, both the inner diameter of the cylinder 1 and the diameter of the flight 2b of the screw 2 can be increased accordingly, resulting in increased productivity of the apparatus.

A further advantage of the apparatus according to the invention is that the nozzles 3a allow special embodiments to be provided. For example, a back-pressure valve may be situated in the nozzle 3, preventing the melt from entering the flow channel 7. By dimensioning the cross section of nozzle 3, the speed of the melt flowing in the flow channel 7 can be controlled creating optimal flow conditions. Moreover, extruders currently used in wide-spread chemical foaming technologies can be easily adapted for physical foaming technology.

### REFERENCE SIGNS LIST

- 1: Extruder cylinder
1a Inner surface
1b Wall
- 2: Extruder screw
2a Wall
2b Spiral flight
2c Core
2c1 Surface
- 3: Bore-hole
3a Tubular nozzle
3aa Nozzle orifices
- 5: Inner space
- 7: Inner flow-channel
- 8: Feeder unit
8a Feeder inlet
8b Extrusion outlet
- 12: Spray head
- 15: Inlet opening
- 16, 17, 18: Bore holes
- 19: Rotating part
- 21: Vane
- 31: Hole
- 32: Sintered metal sleeve (or spray disc)
32a, 32aa Disc
- 33: Connecting element (or stepped shoulders)
- 35, 36, 37: Channels
- 38: Opening
- 40: Chopper vane
- 45: Gap
- 50: Cogwheel
- B: Inlet opening to at least one bore-hole 3
- F: Surface of the disc
- H: Direction of flow
- P: Mantle
- T: Axis of the nozzle 3a
- t: Axis of the nozzle orifice 3aa

## Claims

1. An apparatus for producing microcellular foams, in which an extruder cylinder (1) and an extruder screw (2) provided with a spiral flight (2b) therein and running around a core (2c) are situated, the apparatus having a feeder unit (8) suitable for feeding a polymeric base material into an inner space (5) delimited by the cylinder (1) and the extruder screw (2) and connected to a feeder inlet (8a) formed on the cylinder (1) and communicating with the inner space (5), an extrusion outlet (8b) being formed on the cylinder (1), the apparatus further comprising means for feeding a foaming agent into the inner space (5) and means for rotating the screw (2), wherein the means for feeding said foaming agent is at least one nozzle (3a) connected to a bore hole (3), a nozzle orifice (3aa) of which, opening into the inner space (5), is situated between the surface (2c1) of the core (2c) and the inner surface (1a) of the cylinder (1) in such a way that the distance between the nozzle orifice (3aa) and the surface (2c1) is greater than 0, and wherein the nozzle (3a) is connected to the bore hole (3) formed in a wall (1b) of the cylinder (1), and wherein the nozzle orifice (3aa) of the nozzle (3a) is situated on a surface (F) of a disc (32a) situated in the inner space (5), and a mantle (P) of the disc (32a) is in contact with the inner wall (1a) of the cylinder (1) in the vicinity of the bore hole (3), and a channel (35, 37) for guiding the foaming agent is formed on the mantle (P) of the disc (32a), and a melt channel (36) is formed between two surfaces (F) of the disc (32a), and wherein the nozzle orifices (3aa) of the nozzles (3a) are situated on an inner surface of the melt channel (36) formed between the two surfaces (F) of the disc (32), **characterized in that** at least two discs (32) are situated side by side, and a first disc (32) is attached to the screw (2), while a second disc (32) is attached to the inner surface (1a) of the cylinder (1).

2. A method for producing microcellular foams, comprising feeding a polymeric base material and a foaming agent into an inner space (5) formed between an extruder cylinder (1) and an extruder screw (2) placed therein provided with a spiral flight (2b) and running around a core (2c), while the screw (2) is rotated, and extruding a composition composed of the polymeric base material and the foaming agent through an extrusion outlet (8b) from the cylinder (1), wherein the foaming agent is metered into the inner space (5) through a nozzle orifice (3aa) of at least one nozzle (3a), the nozzle orifice (3aa) being situated between the surface (2c1) of the core (2c) and an inner surface (1a) of the cylinder (1) at a distance between the nozzle orifice (3aa) and the surface (2c1) that is greater than 0, and wherein the foaming agent is metered to the nozzle (3a) through a bore hole (3) formed in a wall (1b) of the cylinder (1), and wherein a disc (32) situated around the core (2c) is placed in the inner space (5), a melt channel (36) is formed between the two surfaces (F) of the disk (32), and the nozzle orifice (3aa) of the nozzle (3a) is placed on the disc (32), and wherein the nozzle orifice (3aa) of the nozzle (3a) is situated on an inner surface of the melt channel (36), **characterized in that** at least two consecutive discs (32) are used and the discs (32) are attached to the screw (2) or to the cylinder (1).

## Patentansprüche

1. Vorrichtung zur Herstellung von mikrozellulären Schäumen, in der sich ein Extruderzylinder (1) und eine Extruderschnecke (2) befinden, die mit einem spiralförmigen Gang (2b) versehen ist und um einen Kern (2c) läuft, wobei die Vorrichtung eine Zuführeinheit (8) aufweist, geeignet zum Zuführen eines polymeren Grundmaterials in einen Innenraum (5), der durch den Zylinder (1) und die Extruderschnecke (2) begrenzt ist und mit einem auf dem Zylinder (1) ausgebildeten Zuführungseinlass (8a) verbunden ist und mit dem Innenraum (5) kommuniziert, wobei ein Extrusionsauslass (8b) auf dem Zylinder (1) ausgebildet ist, wobei die Vorrichtung ferner Mittel zum Zuführen eines Schaummittels in den Innenraum (5) und Mittel zum Drehen der Schnecke (2) umfasst, wobei das Mittel zum Zuführen des Schaummittels mindestens eine Düse (3a) ist, die mit einem Bohrloch (3) verbunden ist, wobei eine Düsenöffnung (3aa) davon, die sich in den Innenraum (5) öffnet, so zwischen der Oberfläche (2c1) des Kerns (2c) und der Innenfläche (1a) des Zylinders (1) angeordnet ist, dass der Abstand zwischen der Düsenöffnung (3aa) und der Oberfläche (2c1) größer als 0 ist, und wobei die Düse (3a) mit dem in einer Wand (1b) des Zylinders (1) ausgebildeten Bohrloch (3) verbunden ist und wobei die Düsenöffnung (3aa) der Düse (3a) sich auf einer Oberfläche (F) einer Scheibe (32a) befindet, die sich im Innenraum (5) befindet, und ein Mantel (P) der Scheibe (32a) in Kontakt mit der Innenwand (1a) des Zylinders (1) in der Nähe des Bohrlochs (3) steht und ein Kanal (35, 37) zum Führen des Schaummittels auf dem Mantel (P) der Scheibe (32a) ausgebildet ist und ein Schmelzkanal (36) zwischen zwei Oberflächen (F) der Scheibe (32a) ausgebildet ist, und wobei die Düsenöffnungen (3aa) der Düsen (3a) auf einer Innenfläche des Schmelzkanals (36) angeordnet sind, der zwischen den beiden Oberflächen (F) der Scheibe (32) gebildet ist, **dadurch gekennzeichnet, dass** mindestens zwei Scheiben (32) nebeneinander angeordnet sind und eine erste Scheibe (32) an der Schnecke (2) angebracht ist, während eine zweite Scheibe (32) an der Innenfläche (1a) des Zylinders (1) angebracht ist.

2. Verfahren zur Herstellung von mikrozellulären Schäumen, umfassend das Zuführen eines polymeren Grundmaterials und eines Schaummittels in einen Innenraum (5), der zwischen einem Extruderzylinder (1) und einer darin angeordneten Extruderschnecke (2) gebildet ist, die mit einem spiralförmigen Gang (2b) versehen ist und um eine Kern (2c) läuft, während die Schnecke (2) gedreht wird, und Extrudieren einer Zusammensetzung, die aus dem polymeren Grundmaterial und dem Schaummittel zusammengesetzt ist, durch einen Extrusionsauslass (8b) aus dem Zylinder (1), wobei das Schaummittel durch eine Düsenöffnung (3aa) von mindestens einer Düse (3a) in den Innenraum (5) dosiert wird, wobei sich die Düsenöffnung (3aa) zwischen der Oberfläche (2c1) des Kerns (2c) und einer Innenfläche (1a) des Zylinders (1) in einem Abstand zwischen der Düsenöffnung (3aa) und der Fläche (2c1) befindet, der größer als 0 ist, und wobei das Schaummittel zur Düse (3a) durch ein Bohrloch (3) dosiert wird, das in einer Wand (1b) des Zylinders (1) ausgebildet ist, und worin eine Scheibe (32), die um den Kern (2c) angeordnet ist, im Innenraum (5) angeordnet ist, ein Schmelzkanal (36) zwischen den beiden Oberflächen (F) der Scheibe (32) ausgebildet ist, und die Düsenöffnung (3aa) der Düse (3a) auf der Scheibe (32) angeordnet ist, und wobei sich die Düsenöffnung (3aa) der Düse (3a) auf einer Innenfläche des Schmelzkanals (36) befindet, **dadurch gekennzeichnet, dass** mindestens zwei aufeinanderfolgende Scheiben (32) verwendet werden und die Scheiben (32) an der Schnecke (2) oder am Zylinder (1) befestigt sind.

## Revendications

1. Appareil pour produire des mousses microcellulaires, dans lequel sont situés un cylindre d'extrusion (1) et une vis d'extrusion (2) munie d'un vol en spirale (2b) et tournant autour d'un noyau (2c), l'appareil ayant une unité d'alimentation (8) adapté pour introduire un matériau de base polymère dans un espace intérieur (5) délimité par le cylindre (1) et la vis d'extrusion (2) et connecté à une entrée d'alimentation (8a) formée sur le cylindre (1) et communiquant avec l'espace intérieur (5), une sortie d'extrusion (8b) étant formée sur le cylindre (1), l'appareil comprenant en outre des moyens pour introduire un agent moussant dans l'espace intérieur (5) et des moyens pour faire tourner la vis (2), dans lequel le moyen d'alimentation dudit agent moussant est au moins une buse (3a) reliée à un trou de forage (3), dont un orifice de buse (3aa), débouchant dans l'espace intérieur (5), est situé entre le la surface (2c1) du noyau (2c) et la surface intérieure (la) du cylindre (1) de telle sorte que la distance entre l'orifice de buse (3aa) et la surface (2c1) est supérieure à 0, et dans lequel la buse (3a) est reliée au trou de forage (3) formé dans une paroi (1b) du cylindre (1), et dans lequel l'orifice de buse (3aa) de la buse (3a) est située sur une surface (F) d'un disque (32a) située dans l'espace intérieur (5), et un manteau (P) du disque (32a) est en contact avec la paroi intérieure (la) du cylindre (1) au voisinage du trou de forage (3), et un canal (35, 37) pour guider l'agent moussant est formé sur le manchon (P) du disque (32a), et un canal de fusion (36) est formé entre deux surfaces (F) du disque (32a), et dans lequel les orifices de buse (3aa) des buses (3a) sont situés sur une surface intérieure du canal de fusion (36) formé entre les deux surfaces (F) du disque (32), **caractérisé en ce qu'**au moins deux disques (32) sont situés côte à côte, et un premier disque (32) est attaché sur la vis (2), tandis qu'un deuxième disque (32) est attaché à la surface intérieure (la) du cylindre (1).

2. Procédé de production de mousses microcellulaires, comprenant l'introduction d'un matériau de base polymère et d'un agent moussant dans un espace intérieur (5) formé entre un cylindre d'extrusion (1) et une vis d'extrusion (2) placée à l'intérieur et pourvue d'un vol en spirale (2b) et tournant autour d'un noyau (2c), tandis que la vis (2) tourne, et extrudant une composition composée du matériau de base polymère et de l'agent moussant à travers une sortie d'extrusion (8b) du cylindre (1), dans lequel l'agent moussant est dosé dans l'espace intérieur (5) à travers un orifice de buse (3aa) d'au moins une buse (3a), l'orifice de buse (3aa) étant situé entre la surface (2c1) du noyau (2c) et une surface intérieure (la) du cylindre (1) à une distance entre l'orifice de buse (3aa) et la surface (2c1) qui est supérieure à 0, et dans lequel l'agent moussant est dosé à la buse (3a) à travers un trou de forage (3) formé dans une paroi (1b) du cylindre (1), et dans lequel un disque (32) situé autour du noyau (2c) est placé dans l'espace intérieur (5), un canal de fusion (36) est formé entre les deux surfaces (F) du disque (32), et l'orifice de buse (3aa) de la buse (3a) est placé sur le disque (32) et dans lequel l'orifice de buse (3aa) de la buse (3a) est situé sur une surface intérieure du canal de fusion (36), **caractérisé en ce qu'**au moins deux disques consécutifs (32) sont utilisés et les disques (32) sont fixés à la vis (2) ou au cylindre (1).
